# FASCICULE DE BREVET EUROPEEN

(11) **EP 3 428 513 B1**
(45) Date de publication et mention de la délivrance du brevet: **12.04.2023**
(21) Numéro de dépôt: 18183007.6
(22) Date de dépôt: 11.07.2018
(51) Int. Cl.: F21S 41/153, F21S 41/143, F21S 41/663, B60Q 1/00

(54) **DISPOSITIF D'ÉCLAIRAGE PROJETANT DEUX MATRICES DE PIXELS LUMINEUX DÉCALÉES VERTICALEMENT**
BELEUCHTUNGSVORRICHTUNG, DIE ZWEI VERTIKAL VERSETZTE LEUCHTPIXEL-MATRIZEN PROJIZIERT
LIGHTING DEVICE PROJECTING TWO MATRICES OF VERTICALLY-SHIFTED LIGHT PIXELS

(30) Priorité: 13.07.2017 FR 1756659
(43) Date de publication de la demande: 16.01.2019
(73) Titulaire: Valeo Vision, 93012 Bobigny Cedex (FR)
(72) Inventeur: ROELS, Sebastien, 93012 Bobigny Cedex (FR); PELLARIN, Marie, 93012 Bobigny Cedex (FR); SANCHEZ, Vanesa, 93012 Bobigny Cedex (FR)
(74) Mandataire: Valeo Visibility

(56) Documents cités:
- EP-A1- 2 607 165
- WO-A1-2013/182573
- WO-A1-2014/191528
- WO-A1-2016/050983
- DE-A1-102014 216 545
- DE-A1-102015 225 105
- FR-A1- 3 038 694
- US-A1- 2015 070 926

## Description

### DOMAINE TECHNIQUE DE L'INVENTION

L'invention concerne un dispositif d'éclairage pour véhicule automobile comportant au moins un premier module optique projetant une matrice de pixels lumineux juxtaposés.

### ARRIERE PLAN TECHNIQUE DE L'INVENTION

On connaît déjà des dispositifs d'éclairage de ce type. Ils sont aptes à émettre longitudinalement vers l'avant un faisceau lumineux final segmenté. Le dispositif d'éclairage comporte une matrice de sources lumineuses élémentaires qui est projetée vers l'avant pour former un faisceau lumineux final vers l'avant présentant une matrice de pixels lumineux. En allumant ou en éteignant sélectivement chacune des sources élémentaires, on allume ou éteint le pixel lumineux correspondant. Il est ainsi possible de créer un faisceau lumineux final éclairant spécifiquement certaines zones de la route en avant du véhicule, tout en laissant dans l'obscurité d'autres zones.

Un tel dispositif d'éclairage est notamment utilisé dans des dispositifs d'éclairage avant pour réaliser une fonction d'éclairage adaptatif aussi dite "ADB", acronyme de l'expression anglaise "Adaptative Driving Beam". Une telle fonction ADB est destinée à permettre de détecter de façon automatique un usager de la route susceptible d'être ébloui par un faisceau d'éclairage émis en mode feu de route par un projecteur, et à modifier le contour de ce faisceau d'éclairage de manière à créer une zone d'ombre à l'endroit où se trouve l'usager détecté tout en continuant à éclairer la route avec un faisceau à grande portée de part et d'autre de l'usager. Les avantages de la fonction ADB sont multiples : confort d'utilisation, meilleure visibilité par rapport à un éclairage en mode feu de croisement, risque d'éblouissement fortement réduit, conduite plus sûre...

Avantageusement, le faisceau lumineux sera composé de pixels lumineux de petite taille pour améliorer sa résolution. Ceci permet d'améliorer encore le confort d'éclairage de la route.

Notamment pour des raisons de coûts, il est préférable de réaliser un faisceau présentant une zone centrale ayant une plus haute résolution que la zone périphérique, c'est-à-dire des pixels lumineux de plus petite taille dans l'axe de la direction de la marche avant du véhicule que les pixels lumineux qui éclairent à la périphérie de cette zone centrale.

On cherche plus particulièrement à obtenir des pixels lumineux présentant une très faible hauteur afin de permettre l'éclairage de la route au-dessus et en-dessous d'une zone d'ombre. Par exemple, lorsqu'un usager de la route est détecté à grande distance en avant du véhicule, par exemple au-delà de la portée d'un feu de croisement, les pixels lumineux qui éclairent ce véhicule sont éteints. Lorsque les pixels lumineux présentent une faible hauteur, il est possible de continuer à éclairer la route vers l'avant au plus près de ce véhicule, au-delà de la portée d'un feu de croisement.

Un dispositif d'éclairage permettant de projeter un faisceau lumineux composé de pixels lumineux est décrit dans le demande de brevet DE 10 2014 216 545 A1.

En outre, une meilleure résolution verticale de la matrice de pixels lumineux dans l'axe de la marche avant du véhicule permettrait au dispositif d'éclairage de réaliser une fonction réglementaire de feu à coupure au moyen de ladite matrice en éteignant les pixels lumineux agencés au-dessus de la ligne de coupure. Une meilleure résolution verticale permettrait ainsi d'obtenir un positionnement plus précis des tronçons horizontaux de la ligne de coupure. Si la ligne de coupure présente en outre un tronçon oblique, ce dernier sera réalisé de manière plus précise.

Dans l'état actuel de la technique, la réduction de la taille des pixels lumineux est limitée, par exemple à des carrés s'étendant verticalement sur un champ angulaire de 1° et transversalement sur un champ angulaire de 1°. L'obtention de pixels lumineux plus petits demeure techniquement possible mais engendrerait des coûts trop importants pour permettre leur industrialisation. En outre, l'efficacité optique d'un tel système serait extrêmement faible, par exemple inférieure à 20%.

### BREF RESUME DE L'INVENTION

La présente invention concerne un dispositif d'éclairage pour véhicule automobile, le dispositif comprenant :
- un premier module d'éclairage projetant au moins une première matrice de premiers pixels lumineux juxtaposés activables indépendamment, les premiers pixels lumineux étant agencés en plusieurs colonnes verticales et en au moins une ligne transversale de hauteur déterminée,
- un deuxième module d'éclairage projetant une deuxième matrice de deuxièmes pixels lumineux juxtaposés activables indépendamment, les deuxièmes pixels lumineux étant agencés en au moins une ligne transversale,

la deuxième matrice étant superposée avec la première matrice avec un décalage vertical d'une distance de décalage verticale inférieure à ladite hauteur déterminé par rapport aux premiers pixels lumineux de la première matrice, le décalage étant défini par rapport à une position de superposition « non décalée » dans laquelle au moins un bord transversal d'extrémité inférieur de la deuxième matrice est verticalement superposé avec un bord transversal d'extrémité inférieure de la première matrice,
caractérisé en ce que chaque pixel lumineux de la première matrice et de la deuxième matrice présentant une hauteur inférieure à 2°.

Le terme "juxtaposé" signifie que deux premiers pixels lumineux adjacents, verticalement ou transversalement, sont jointifs. Cela signifie que lorsque tous les pixels lumineux sont allumés, la première matrice éclaire de manière sensiblement homogène l'écran. Deux pixels lumineux adjacents se chevauchent légèrement. Cependant, lorsqu'un premier pixel lumineux est éteint, une portion de la place qu'il occupait sur l'écran n'est plus éclairée par la première matrice.

Un tel dispositif d'éclairage permet d'obtenir une résolution verticale élevée pour un coût de fabrication très raisonnable, notamment en utilisant des sources de lumière standard. Ce dispositif permet en outre de conserver un rendement lumineux élevé, par exemple supérieur à 30%. On définit le "rendement lumineux" comme étant le rapport entre le flux lumineux en sortie du dispositif d'éclairage, c'est-à-dire celui du faisceau lumineux, et le flux lumineux entrant, c'est-à-dire la somme du flux lumineux de toutes les diodes électroluminescentes.

La résolution verticale plus élevée permet en outre de réduire la taille verticale des zones d'ombre autour d'un usager de la route détecté pour garantir un éclairage plus confortable de la route tout en préservant les usagers de la route des risques d'éblouissement.

En outre, réaliser la fonction d'éclairage au moyen de deux modules d'éclairage distincts permet de répartir la chaleur émise par les sources lumineuses sur deux modules. Le refroidissement du dispositif d'éclairage est ainsi facilité par rapport à un module d'éclairage unique qui doit fournir une intensité lumineuse très élevée.

Selon un autre aspect de l'invention, chaque deuxième pixel lumineux de la deuxième matrice présente la même largeur qu'un premier pixel lumineux en coïncidence de la première matrice. Ceci permet de conserver une résolution transversale au moins aussi bonne que celle de la première matrice prise seule.

Selon un autre aspect de l'invention, la deuxième matrice comporte au moins autant de lignes de pixels lumineux que la première matrice.

La deuxième matrice comporte une ligne de plus que la première matrice, les deuxièmes pixels lumineux de la ligne d'extrémité supérieure et de la ligne d'extrémité inférieure de la deuxième matrice débordant verticalement à l'extérieur de la première matrice.

L'avantage de ce mode de réalisation est que la matrice présentant un nombre inférieur de lignes est moins onéreuse à fabriquer, la superposition des deux matrices permettant néanmoins de conserver une bonne résolution verticale.

En outre chaque pixel lumineux de la première matrice et de la deuxième matrice présente une largeur inférieure à 2°.

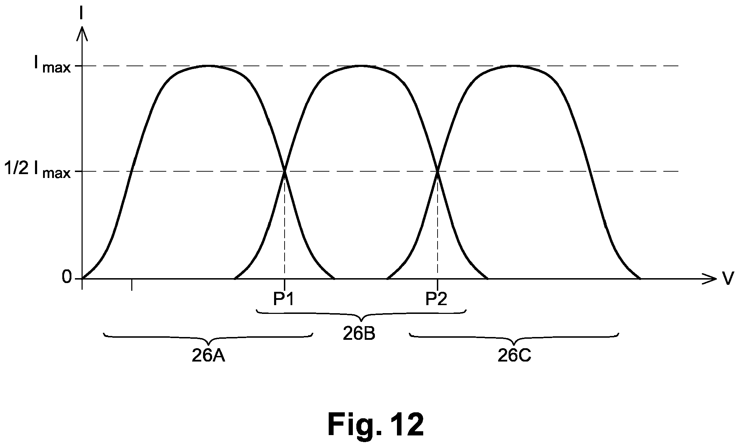

La largeur est définie comme étant sensiblement égale à la largeur à mi-hauteur du profil d'intensité lumineuse, comme cela est par exemple décrit par la suite en référence à la figure 12.

De préférence, mais de manière non limitative, la distance de décalage vertical de la deuxième matrice par rapport à la première matrice est sensiblement égale à la moitié de la hauteur déterminée.

Ceci permet d'obtenir une résolution verticale homogène sur toute la hauteur de la zone éclairée par les deux matrices. La résolution verticale est ainsi supérieure à la résolution d'une seule matrice. La résolution verticale est par exemple multipliée par un facteur strictement supérieur à 1 pouvant aller jusqu'à 2 par rapport à une seule matrice comportant des pixels de hauteur similaire à ceux d'une seule des deux matrices.

Selon un autre aspect de l'invention, les matrices comportent plus de colonnes que de lignes. Ceci permet notamment d'éclairer la route sur toute sa largeur et sur une portée suffisante pour réaliser la fonction de feu "ADB" et/ou une fonction de feu à coupure. Le champ éclairé est ainsi plus large que haut.

Selon un autre aspect de l'invention, les colonnes de la deuxième matrice sont agencées en coïncidence avec les colonnes de la première matrice. Ceci permet de simplifier le procédé de commande du dispositif d'éclairage.

Selon un autre aspect de l'invention, le faisceau lumineux à pixels lumineux est émis selon un axe d'émission, la première matrice étant centrée verticalement par rapport audit l'axe. Cette disposition permet de réaliser une ligne de coupure d'un faisceau à coupure en activant sélectivement certains pixels des deux matrices.

### BREVE DESCRIPTION DES FIGURES

D'autres caractéristiques et avantages de l'invention apparaitront au cours de la lecture de la description détaillée qui va suivre pour la compréhension de laquelle on se reportera aux dessins annexés dans lesquels :
- la figure 1 est une vue de côté qui représente schématiquement un véhicule équipé d'un dispositif d'éclairage réalisé selon les enseignements de l'invention ;
- la figure 2 est une vue en perspective qui représente deux modules d'éclairage du dispositif d'éclairage de la figure 1 qui projettent chacun une matrice de pixels lumineux ;
- la figure 3A est une vue de face d'un écran éclairé uniquement par la première matrice de pixels lumineux projetée par le premier module d'éclairage ;
- la figure 3B est une vue de face d'un écran éclairé uniquement par la deuxième matrice de pixels lumineux projetée par le deuxième module d'éclairage ;
- la figure 4 est une vue de face de l'écran éclairé simultanément par les deux matrices ;
- la figure 5 est une vue de détail de l'écran qui représente une colonne de la première matrice et de la deuxième matrice, et dans laquelle un premier segment est éteint ;
- la figure 6 est une vue de détail de l'écran qui représente une colonne de la première matrice et de la deuxième matrice, et dans laquelle un segment d'extrémité supérieure est éteint ;
- la figure 7 est une vue similaire à celle de la figure 4 dans laquelle certains pixels lumineux ont été éteints pour former un faisceau à coupure ;
- les figures 8 à 10 sont des vues similaires à celle de la figure 4 qui représentent des variantes de réalisation de l'invention dans lesquelles le nombre de ligne de pixels lumineux de la première matrice et/ou de la deuxième matrice varient par rapport au mode de réalisation de la figure 4 ;
- la figure 11 est une vue schématique de côté qui représente le premier module d'éclairage de la figure 2 ;
- la figure 12 est diagramme qui représente l'intensité lumineuse de trois pixels adjacents d'une colonne de la première matrice le long d'un plan de coupe vertical passant par leur centre.

### DESCRIPTION DETAILLEE DES FIGURES

Dans la suite de la description, des éléments présentant une structure identique ou des fonctions analogues seront désignés par une même référence.

Dans la suite de la description, on adoptera à titre non limitatif des orientations longitudinale, orientée d'arrière en avant selon le sens de déplacement normal du véhicule, verticale, orientée de bas en haut, et transversale, orientée de gauche à droite indiquées par le trièdre "L,V,T" des figures.

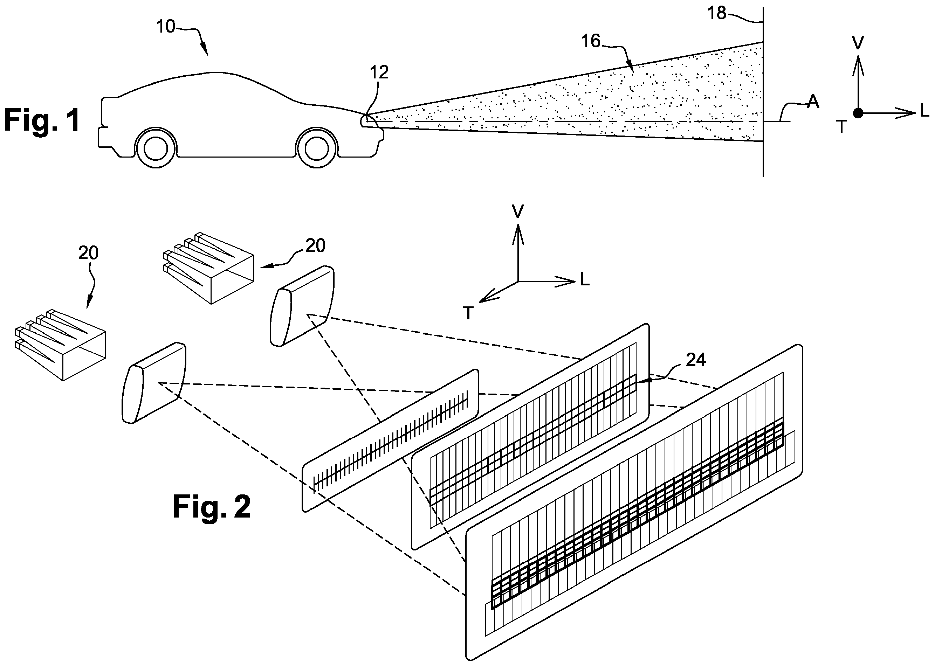

On a représenté à la figure 1 un véhicule automobile 10 équipé d'un dispositif d'éclairage 12 qui produit un faisceau lumineux à pixels lumineux 16 qui réalise une fonction d'éclairage déterminée. Il s'agit ici d'une fonction de feu de route. Le faisceau lumineux à pixels lumineux 16 est émis selon un axe "A" d'émission sensiblement longitudinal vers l'avant du véhicule 10.

Pour les besoins de la description, on a agencé un écran 18 transversal vertical agencé à une distance longitudinale déterminée en avant du véhicule 10. L'écran 18 est ici agencé à 25 m du véhicule.

Comme cela est illustré à la figure 2, le dispositif d'éclairage 12 comporte au moins un premier module d'éclairage 20 et un deuxième module d'éclairage 22. Les deux modules d'éclairage 20, 22 sont ici distincts l'un de l'autre. Très préférentiellement, ils peuvent être inclus dans un même projecteur. Cet agencement permet de faciliter le réglage de l'alignement des modules d'éclairage entre eux. De plus, cela simplifie l'homologation du projecteur.

En variante, les deux modules d'éclairage peuvent être inclus dans deux projecteurs distincts.

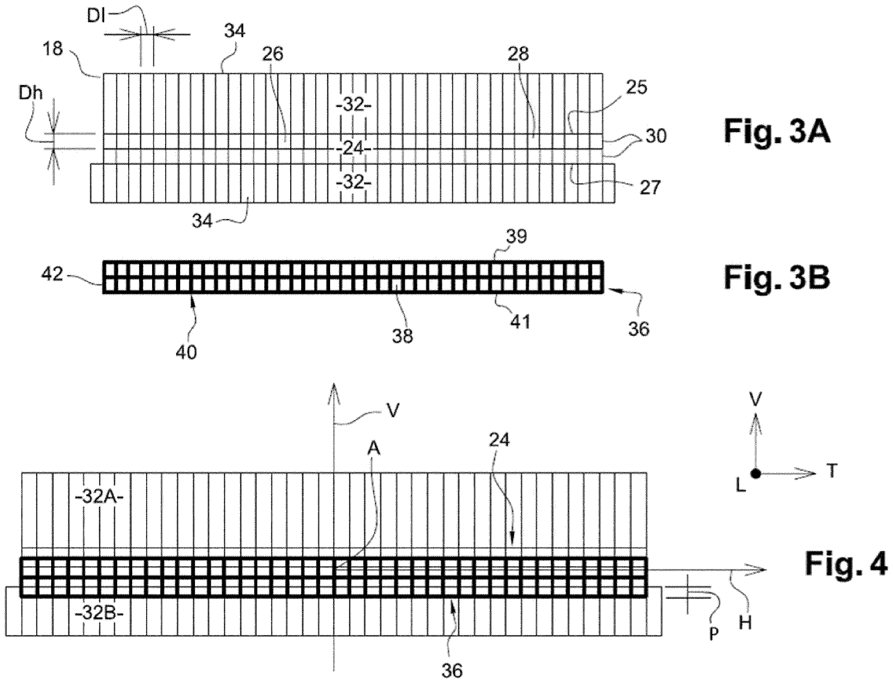

Le premier module d'éclairage 20 est conçu pour projeter au moins une première matrice 24 de premiers pixels lumineux 26 juxtaposés activables indépendamment. On a représenté à la figure 3A les zones de l'écran 18 qui sont éclairées par la première matrice 24 de pixels lumineux 26. La première matrice 26 est délimitée vers le haut par un bord 25 transversal supérieur et vers le bas par un bord 27 transversal inférieur.

Le terme "juxtaposé" signifie que deux premiers pixels lumineux 26 adjacents, verticalement ou transversalement, sont jointifs. Cela signifie que lorsque tous les pixels lumineux 26 sont allumés, la première matrice 24 éclaire de manière sensiblement homogène l'écran 18. A cet effet, deux pixels lumineux 26 adjacents se chevauchent légèrement. Cependant, lorsqu'un premier pixel lumineux 26 est éteint, une portion de la place qu'il occupait sur l'écran 18 n'est pas éclairée par les pixels voisins. L'exemple représenté à la figure 12 explique ce que signifient les termes "chevauche légèrement". La figure 12 représente les profils d'intensité lumineuse de trois pixels 26A, 26B, 26C adjacents d'une même colonne 28 projetés sur l'écran 18. Chaque pixel 26A, 26B, 26C présente un profil d'intensité en forme de cloche, l'intensité maximale Imax étant située au centre du pixel 26A, 26B, 26C. Comme on peut le voir le pixel inférieur 26A chevauche le pixel 26B central de manière que les courbes d'intensité se croisent en un point "P1" présentant une intensité sensiblement égale à la moitié de l'intensité maximale Imax. De même, le pixel supérieur 26C chevauche le pixel 26B central de manière que les courbes d'intensité se croisent en un point "P2" présentant une intensité sensiblement égale à la moitié de l'intensité maximale Imax. Une bande centrale comprenant le sommet de la cloche n'est éclairée que par le pixel central 26B et cette bande centrale est entourée de bandes éclairées de manière dégradées et peu intense, qui s'étendent depuis la bande centrale respectivement jusqu'aux points P1 et P2.

On a tracé sur l'écran 18 un axe transversal "H" et un axe vertical "V" concourants au niveau de l'axe "A" d'émission du faisceau lumineux à pixels lumineux 16. Les axes "H" et "V" sont gradués en degré d'ouverture du faisceau lumineux. Dans la suite de la description et dans les revendications, la hauteur et la largeur d'un pixel lumineux sont données en degré d'ouverture.

La première matrice 24 est agencée à proximité de l'axe "H" concourant avec l'axe d'émission "A". Plus particulièrement, la première matrice 24 est agencée à cheval sur ledit axe "H". Ainsi, la première matrice 24 est centrée verticalement par rapport à l'axe "A".

Les premiers pixels lumineux 26 sont agencés en plusieurs colonnes 28 verticales. Tous les pixels lumineux 26 d'une même colonne 28 verticale présentent une même largeur. Dans l'exemple représenté aux figures, toutes les colonnes 28 présentent ici la même largeur "DI".

En variante non représentée de l'invention, au moins une colonne de pixels lumineux présente une largeur différente des autres.

Les premiers pixels lumineux 26 sont agencés en au moins une ligne 30 transversale. Tous les pixels lumineux 26 d'une même ligne 30 transversale présentent la même hauteur. Dans les exemples représentés aux figures, toutes les lignes 30 transversales présentent la même hauteur déterminée "Dh". Le bord supérieur de la ligne 30 d'extrémité supérieure forme le bord 25 supérieur de la première matrice 26, tandis que le bord inférieur de la ligne 30 d'extrémité inférieure forme le bord 27 inférieur de la matrice.

En variante non représentée de l'invention, au moins une ligne transversale de pixels lumineux présente une hauteur différente des autres lignes.

Dans l'exemple représenté à la figure 3A, la première matrice 24 comporte deux lignes 30 et plusieurs dizaines de colonnes 28. Les premiers pixels lumineux 26 composants la première matrice 24 présentent ainsi une forme et des dimensions identiques. La première matrice 24 présente plus particulièrement un nombre de colonnes 28 supérieur au nombre de lignes 30.

A titre non limitatif, les premiers pixels lumineux 26 présentent ici une forme carrée.

En variante non représentée de l'invention, les premiers pixels lumineux 26 présentent une forme rectangulaire.

Chaque pixel lumineux 26 de la première matrice 24 présente une hauteur "Dh" inférieure à 2°, par exemple une hauteur "Dh" de 1°. Chaque pixel lumineux 26 de la première matrice 24 présente aussi une largeur "DI" inférieure à 2°, par exemple une largeur "DI" de 1°.

La première matrice 24 s'étend par exemple transversalement sur un champ horizontal qui comprend au moins l'intervalle [-30°, +30°], voire [-40°, +40°], transversalement de part et d'autre de l'axe optique "A". La première matrice 24 s'étend par exemple verticalement sur un champ vertical qui comprend au plus l'intervalle [-3°, +3°] verticalement de part et d'autre de l'axe optique "A".

La première matrice 24 est ici étendue vers le haut par une zone d'extension 32A supérieure et vers le bas par une zone d'extension 32B inférieure de pixels lumineux 34 à basse résolution. Les zones d'extension 32A, 32B ne chevauchent que légèrement les premiers pixels lumineux 26 de la première matrice 24. Ces pixels lumineux 34 à basse résolution ont au moins l'une de leur dimension qui est supérieure à celle correspondante d'un premier pixel lumineux 26. Ici, chaque pixel lumineux 34 à basse résolution présente une hauteur supérieure à la hauteur "Dh" d'un premier pixel lumineux 26. En revanche, chaque pixel lumineux 34 à basse résolution présente ici la même largeur qu'un premier pixel lumineux 26. Les pixels lumineux 34 à basse résolution sont alignés verticalement avec chaque colonne 28 de la première matrice 24.

On comprendra que les pixels lumineux 34 formant les zones d'extension 32A, 32B, notamment du fait de leurs dimensions différentes, ne font pas partie de la première matrice 24 au sens de l'invention.

Le deuxième module d'éclairage 22 est conçu pour projeter une deuxième matrice 36 de deuxièmes pixels lumineux 38 juxtaposés activables indépendamment. La deuxième matrice 36 est délimitée vers le haut par un bord 39 supérieur et vers le bas par un bord 41 inférieur. On a représenté à la figure 3B les zones de l'écran 18 qui sont éclairées par la deuxième matrice 36 de pixels lumineux 38. La deuxième matrice 36 de pixels est destinée à être superposée avec la première matrice 24 de pixels.

Le terme "juxtaposé" revêt, pour les pixels lumineux 38 de la deuxième matrice 36, la même signification que pour les pixels lumineux 26 de la première matrice 24.

Chaque pixel lumineux 38 de la deuxième matrice 36 présente une hauteur "Dh" inférieure à 2°, par exemple une hauteur "Dh" de 1°. Chaque pixel lumineux 38 de la deuxième matrice 36 présente aussi une largeur "DI" inférieure à 2°, par exemple une largeur "DI" de 1°.

Les deuxièmes pixels lumineux 38 sont agencés en plusieurs colonnes 40 verticales. Tous les deuxièmes pixels lumineux 38 d'une même colonne 40 verticale présentent une même largeur. Chaque colonne 40 verticale présente plus particulièrement la même largeur que la colonne 28 en coïncidence de la première matrice 24. Dans l'exemple représenté aux figures, toutes les colonnes 40 présentent ici la même largeur "DI".

En variante non représentée de l'invention, au moins une colonne de pixels lumineux présente une largeur différente des autres.

La deuxième matrice 36 est superposée avec la première matrice 24 de manière que chaque colonne 40 de la deuxième matrice 36 soit en coïncidence avec une colonne 28 associée de la première matrice 24. A cet effet, chaque colonne 40 de la deuxième matrice 36 présente la même largeur que la colonne 28 en coïncidence de la première matrice 24.

Les deuxièmes pixels lumineux 38 sont agencés en au moins une ligne 42 transversale. Tous les deuxièmes pixels lumineux 38 d'une même ligne 42 transversale présentent la même hauteur. Dans les exemples représentés aux figures, toutes les lignes 42 transversales présentent la même hauteur déterminée "Dh".

En variante non représentée de l'invention, au moins une ligne transversale de pixels lumineux présente une hauteur différente des autres lignes.

Dans les modes de réalisation représentés aux figures, chaque deuxième pixel lumineux 38 présente ici la même hauteur déterminée "Dh" que les premiers pixels lumineux 26. Dans les modes de réalisation représentés aux figures, chaque deuxième pixel lumineux 38 de la deuxième matrice 36 présente la même largeur "DI" qu'un premier pixel lumineux 26 de la première matrice 24. Ainsi les pixels lumineux 38 de la deuxième matrice 36 sont identiques en forme et en dimensions aux pixels lumineux 26 de la première matrice 24.

En variante non représentée de l'invention, les premiers pixels lumineux 26 présentent une forme rectangulaire.

Les deuxièmes pixels lumineux 38 sont ici agencés en plusieurs colonnes 40 verticales de même largeur "DI" et en au moins une ligne 42 transversale de hauteur déterminée "Dh". Dans l'exemple représenté à la figure 3B, la deuxième matrice 36 comporte deux lignes 42 et plusieurs dizaines de colonnes 40.

De préférence, la deuxième matrice 36 comporte au moins autant de lignes 42 de pixels lumineux 38 que la première matrice 24. Selon certains modes de réalisation qui seront détaillés par la suite, la deuxième matrice 36 comporte une ligne de plus que la première matrice 24.

La deuxième matrice 36 comprend ici autant de colonnes 40 que la première matrice 24. Les colonnes 40 de la deuxième matrice 36 présentant la même largeur que les colonnes 28 de la première matrice 24, la deuxième matrice 36 s'étend donc transversalement sur le même champ horizontal que la première matrice 24, c'est-à-dire au moins sur l'intervalle [-30°, +30°], voire [-40°, +40°], transversalement de part et d'autre de l'axe optique "A".

En variante, la deuxième matrice 36 comporte moins de colonnes 40 que la première matrice 24. La deuxième matrice 36 s'étend alors sur un champ angulaire plus restreint que celui de la première matrice 24 et elle est centrée transversalement par rapport à l'axe optique "A".

Selon encore une autre variante, la deuxième matrice est décentrée transversalement par rapport à l'axe optique. Par exemple, la matrice est décalée vers la droite.

Par ailleurs, la deuxième matrice 36 comprend ici autant de lignes 42 que la première matrice 24. La deuxième matrice 36 s'étend donc verticalement sur un champ vertical de même ouverture angulaire que celui de la première matrice 24, c'est-à-dire sur un champ vertical d'environ 6°.

En variante, les deux matrices présentent des champs verticaux présentant des ouvertures angulaires de valeurs différentes, par exemple si les deux matrices ne comportent pas le même nombre de lignes et/ou si les matrices comportent des lignes de hauteurs différentes.

La deuxième matrice 36 présente ici un plus grand nombre de colonnes 40 que de lignes 42.

Comme cela est illustré à la figure 4, les modules d'éclairage 20, 22 sont conçus pour que la deuxième matrice 36 soit projetée de manière à être superposée avec la première matrice 24 avec un décalage vertical d'une distance de décalage vertical "P" inférieure à ladite hauteur "Dh" d'un pixel lumineux 26 par rapport aux premiers pixels lumineux 26 de la première matrice 24.

Le terme "décalage" est défini par rapport à une position de superposition "non décalée" dans laquelle au moins le bord transversal 41 d'extrémité inférieur de la deuxième matrice 36 est verticalement superposée avec le bord 27 transversal d'extrémité inférieure de la première matrice 24.

Dans l'exemple représenté à la figure 4, les deux matrices 24, 36 comportent le même nombre de lignes 30, 42, et les lignes 30, 42 présentent une hauteur uniforme. La deuxième matrice 36 est décalée vers le bas de la distance de décalage "P" par rapport à la première matrice 24.

La distance de décalage vertical "P" de la deuxième matrice 36 par rapport à la première matrice 24 est sensiblement égal à la moitié de la hauteur déterminée "Dh" d'un pixel lumineux 26, 38. Ainsi, les pixels lumineux 38 de la deuxième matrice 36 chevauchent verticalement les pixels lumineux 26 de la première matrice 24.

En variante, lorsque les lignes des matrices de pixels présentent des hauteurs non uniformes, la distance de décalage et la hauteur des lignes sont déterminée de manière que chaque bord transversal inférieur et supérieur d'un pixel de la deuxième matrice soit agencé verticalement au milieu d'un pixel correspondant de la première matrice. Par exemple, les lignes d'extrémité supérieure et/ou inférieure d'au moins l'une des matrices présentent des hauteurs supérieures à celles des lignes intermédiaires. Cela permet avantageusement d'augmenter l'ouverture angulaire du champ vertical sans augmenter le nombre de pixels. Ceci permet de réduire le coût de réalisation du module lumineux, notamment en limitant le nombre de sources lumineuses.

La zone éclairée par les deux matrices 24, 36 est alors découpée en segments qui présentent chacun la même largeur "DI" qu'un pixel lumineux 26, 38, mais seulement la moitié de la hauteur "Dh" d'un pixel lumineux 26, 38. Chaque segment est éclairé par une moitié de pixel lumineux 26, 38. Ce décalage permet ainsi d'augmenter la résolution verticale de la zone éclairée par les deux matrices 24, 36.

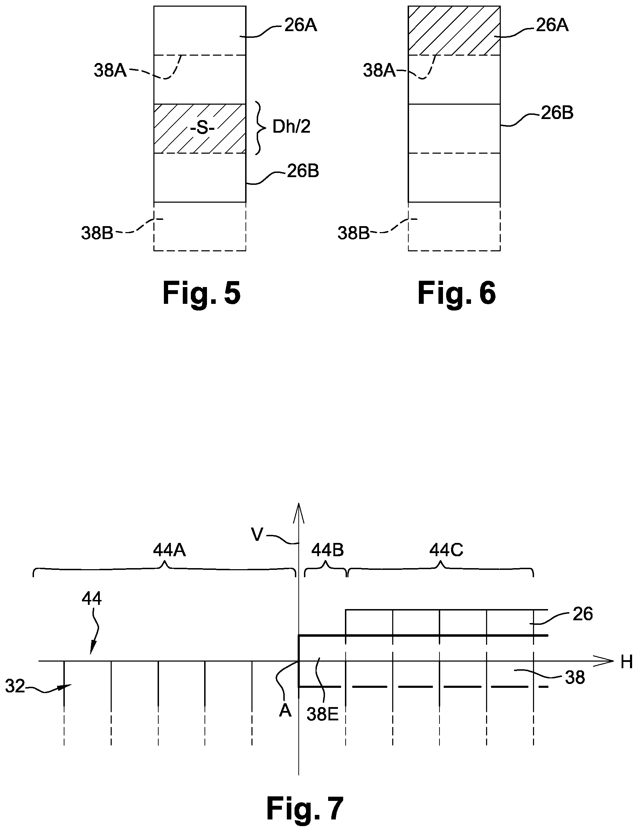

Aux figures 5 et 6, on a représenté en détails une zone de l'écran 18 éclairée par une colonne 28 de la première matrice 24 et la colonne 40 correspondante de la deuxième matrice 36. Les références des pixels lumineux 26, 38 de chaque matrice 24, 36 ont été modifiées pour permettre de repérer les précisément chaque pixel lumineux sur ces figures. Ainsi, les pixels lumineux des lignes supérieures sont référencés respectivement 26A, 38A, tandis que les pixels lumineux des lignes inférieures sont référencés 26B, 38B.

Certains de ces segments sont éclairés simultanément par une moitié, supérieure ou inférieure, de pixel lumineux 26 de la première matrice 24 et par une moitié, respectivement inférieure ou supérieure, de pixel lumineux 38 de la deuxième matrice 38. C'est le cas du segment "S" illustré à la figure 5. Ce segment "S" est éclairé simultanément par la moitié supérieure du pixel lumineux 26B de la première matrice 24 et par la moitié inférieure du pixel lumineux 38A de la deuxième matrice 36. Le segment "S" est ainsi délimité verticalement vers le haut par le pixel lumineux 26A de la première matrice 24 et vers le bas par le pixel lumineux 38B de la deuxième matrice 36. Lorsque les pixels lumineux 26B, 38A sont éteints, le segment "S" n'est plus éclairé. Cependant, les segments adjacents sont susceptibles de demeurer éclairés par les pixels lumineux 26A et 38B.

On remarquera que, du fait de l'extinction de pixels lumineux 26B, 38A plus hauts que le segment "S", les segments situés directement au-dessus et/ou au-dessous du segment "S" éteint présente une intensité lumineuse diminuée du fait qu'ils ne sont alors éclairés que par un unique pixel lumineux 26A ou 38B. Ceci permet d'obtenir une diminution progressive de la luminosité à proximité du segment "S" éteint, procurant ainsi un meilleur confort d'éclairage pour le conducteur.

Dans l'exemple représenté à la figure 6, le segment "S" agencé l'extrémité supérieure de la zone éclairée est éclairé uniquement par une moitié supérieure du pixel lumineux 26A de la ligne 30 supérieure de la première matrice 24. En ce cas, il est uniquement nécessaire d'éteindre le pixel lumineux 26A correspondant de la première matrice 24 pour ne plus éclairer ledit segment "S". Le segment agencé au-dessous dudit segment non éclairé est alors susceptible d'être éclairé par la moitié supérieure du pixel lumineux 38A de la deuxième matrice 36.

Le dispositif d'éclairage 12 réalisé selon les enseignements de l'invention permet aussi de réaliser une fonction de feu à coupure oblique, par exemple une fonction de feu de croisement. Comme illustré à la figure 7, dans ce type de feu, la zone éclairée par le faisceau est délimitée vers le haut par une ligne de coupure 44 sensiblement transversale. La ligne de coupure 44 présente un épaulement 44B qui s'étend avantageusement à un angle d'environ 45° entre deux portions transversales inférieure 44A et supérieure 44C de la ligne de coupure 44. Cet épaulement 44B est agencé à proximité de l'axe optique "A".

Pour réaliser une telle fonction, la zone d'extension supérieure 32A de la première matrice 24 est éteinte, ainsi que les deux lignes 30, 42 supérieures de chaque matrice 24, 36. Pour la ligne 30 inférieure de la première matrice 24, les pixels lumineux 26 situés du côté de la portion transversale supérieure 44C de la ligne de coupure 44 demeurent allumés, tandis que les pixels lumineux 26 situés du côté de la portion transversale inférieure 44A de la ligne de coupure 44 sont éteintes.

De même, pour la ligne 42 inférieure de la deuxième matrice 36, les pixels lumineux 38 situés du côté de la portion transversale supérieure 44C de la ligne de coupure 44 demeurent allumés, tandis que les pixels lumineux 38 situés du côté de la portion transversale inférieure 44A de la ligne de coupure sont éteints. De cette manière, la portion inférieure 44A de la ligne de coupure 44 est formée par la limite supérieure de la zone d'extension 32B inférieure, et la portion transversale supérieure 44C est ainsi formée par les bords supérieurs des pixels lumineux 26 allumés de la première matrice 24.

Un pixel lumineux 38E, dit d'épaulement, de la deuxième matrice 36 demeure allumé dans la première colonne à partir de laquelle les pixels lumineux 26 de la première matrice 24 sont éteints, dans la zone de l'épaulement 44B. L'épaulement 44B est ainsi formé par l'escalier réalisé par le pixel lumineux 38E d'épaulement. De cette manière, il est possible d'obtenir un faisceau à coupure présentant un épaulement progressif en utilisant uniquement les matrices 24, 36.

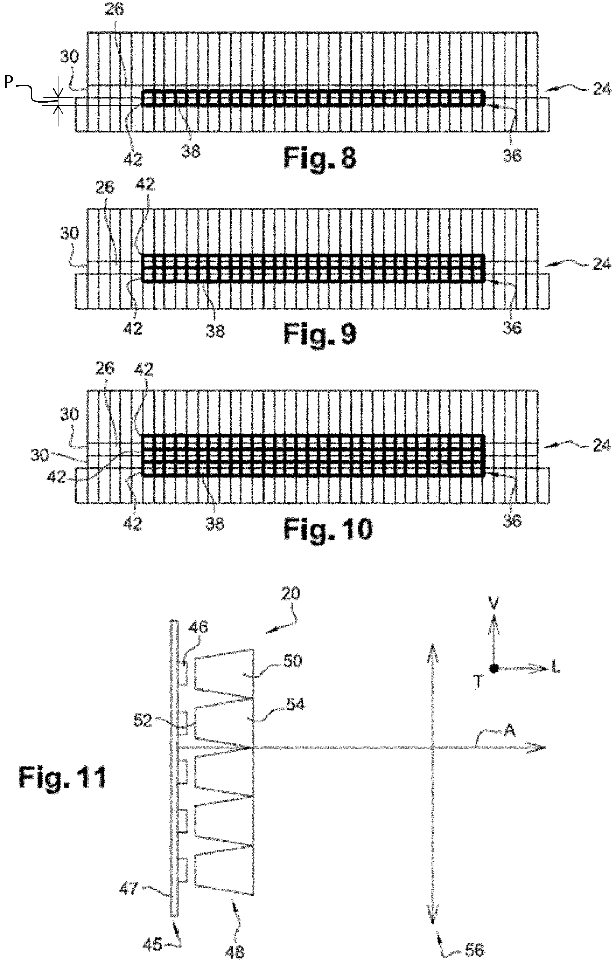

On a représenté aux figures 8 à 10 des variantes de réalisation de l'invention. Dans toutes ces variantes, la distance de décalage vertical "P" de la deuxième matrice 36 par rapport à la première matrice 24 est sensiblement égale à la moitié de la hauteur déterminée "Dh" d'un pixel lumineux 26, 38.

Dans la variante représentée à la figure 8, la première matrice 24 comporte une unique ligne 30 de pixels lumineux 26 et la deuxième matrice 36 comporte une unique ligne 42 de pixels lumineux 38. La ligne 42 de la deuxième matrice 36 est décalée de la distance de décalage "P" vers le bas.

Ainsi, seule la moitié inférieure des pixels lumineux 26 de la première matrice 24 est chevauchée par la moitié supérieure des pixels lumineux 38 de la deuxième matrice 36. Dans cette configuration, il est possible d'éteindre un segment éclairé par la moitié supérieure d'un pixel lumineux 26 de la première matrice 24 tout en laissant le segment agencé au-dessous éclairé par la moitié supérieure du pixel lumineux 38 correspondant de la deuxième matrice 36.

Néanmoins, pour éteindre le segment éclairé simultanément par un pixel lumineux 26, 38 de chaque matrice 24, 36, il est également nécessaire d'éteindre simultanément le segment éclairé uniquement par ledit pixel lumineux 26 situé directement au-dessus.

Cette variante est cependant parfaitement adaptée pour réaliser un feu à coupure tel qu'illustré à la figure 7.

Dans la variante représentée à la figure 9, la première matrice 24 est identique à celle de la variante de la figure 8. En revanche, la deuxième matrice 36 présente ici une ligne de plus que la première matrice 24, soit deux lignes 42. Les deuxièmes pixels lumineux 38 de la ligne supérieure et de la ligne inférieure de la deuxième matrice 36 débordent verticalement à l'extérieur de la première matrice 24.

Ainsi, la moitié supérieure d'un pixel lumineux 26 de la première matrice 24 est superposée avec une moitié inférieure d'un pixel lumineux 38 de la ligne supérieure de la deuxième matrice 36, tandis que la moitié inférieure d'un pixel lumineux 26 de la première matrice 24 est superposée avec une moitié supérieure d'un pixel lumineux 38 de la ligne inférieure de la deuxième matrice 36.

Contrairement à la variante de la figure 8, l'adjonction de cette ligne 42 supérieure de la deuxième matrice 36 permet désormais d'éteindre indépendamment un segment supérieur ou un segment inférieur éclairé par la première matrice 24.

Dans la variante de la figure 10, la première matrice 24 comporte deux lignes 30 comme dans le mode de réalisation de la figure 4. En revanche, la deuxième matrice 36 présente ici une ligne de plus que la première matrice 24, soit trois lignes 42. Les deuxièmes pixels lumineux 38 de la ligne supérieure et de la ligne inférieure de la deuxième matrice 36 débordent verticalement à l'extérieur de la première matrice 24.

Cette variante fonctionne comme celle de la figure 9, à la différence que la zone éclairée par les matrices 24, 36 s'étendent verticalement sur un plus grand champ angulaire.

Bien entendu, toutes ces variantes permettent de réaliser une fonction de feu à coupure oblique comme cela est décrit en référence à la figure 7.

Un exemple de réalisation du premier module d'éclairage 20 est représenté à la figure 11. La description est applicable au deuxième module d'éclairage 22.

Chaque pixel lumineux 26 de la première matrice 24 est réalisé par des sources lumineuses et des éléments optiques associés. Le module d'éclairage 20 comporte au moins une matrice 45 de diodes électroluminescentes 46 s'étendant orthogonalement à l'axe optique "A". Les diodes électroluminescentes 46 de la matrice 45 sont susceptibles d'être commandées individuellement ou sont susceptibles d'être commandées individuellement en groupes.

Les diodes électroluminescentes 46 de la matrice 45 présentent des surfaces d'émission de la lumière qui sont toutes identiques en forme et en dimension. Toutes les diodes électroluminescentes 46 sont ici portées par une carte à circuit imprimé 47 commune.

Le module d'éclairage 20 comporte aussi au moins un élément optique 48 primaire. L'élément optique primaire 48 est conçu pour répartir la lumière selon une distribution déterminée dans le pixel lumineux 26 associé. L'élément optique primaire 48 comporte ici des guides de lumière 50. Chaque diode électroluminescente 44 est associée individuellement à un guide de lumière 50. Chaque guide de lumière 50 présente une face d'entrée 52 recevant des rayons lumineux émis par la source lumineuse 46 associée. Une face de sortie 54 de chaque guide de lumière 50 est agencée sensiblement dans un même plan transversal vertical. Le module d'éclairage 20 comporte en outre un élément optique secondaire 56 de projection qui permet de projeter la sortie de chaque guide de lumière pour former la première matrice 24.

En variante non représentée, des microlentilles sont agencée à l'entrée et/ou à la sortie des guides de lumière.

Selon une autre variante non représentée, les diodes électroluminescentes sont directement imagées par la lentille de projection sans interposition de guides de lumière.

En variante non représentée de l'invention, on prévoit d'équiper un véhicule avec deux dispositifs d'éclairage comportant chacun une première et une deuxième matrices de pixels superposées selon les enseignements de l'invention. Dans l'un des dispositifs, la deuxième matrice est décentrée transversalement vers la gauche par rapport à l'axe d'émission "A", tandis que dans l'autre des dispositifs, la deuxième matrice est décentrée vers la droite. Les deux faisceaux lumineux à pixels émis par ces deux dispositifs sont alors superposés de manière que les quatre matrices soient superposées au centre du faisceau lumineux avec un décalage vertical les unes par rapport aux autres. Ainsi, sur les côtés gauche et droit du faisceau, l'augmentation de résolution est obtenue par superposition de deux matrices, comme expliqué précédemment, tandis qu'au centre du faisceau, la résolution verticale est encore plus fine, car obtenue par superposition de quatre matrices.

## Revendications

1. Dispositif d'éclairage (12) pour véhicule automobile (10) réalisant une fonction déterminée d'éclairage, le dispositif (12) comprenant :
- un premier module d'éclairage (20) projetant au moins une première matrice (24) de premiers pixels lumineux (26) juxtaposés activables indépendamment, les premiers pixels lumineux (26) étant agencés en plusieurs colonnes (28) verticales et en au moins une ligne (30) transversale de hauteur (Dh) déterminée,
- un deuxième module d'éclairage (22) projetant une deuxième matrice (36) de deuxièmes pixels lumineux (38) juxtaposés activables indépendamment, les deuxièmes pixels lumineux (38) étant agencés en au moins une ligne (42) transversale,
la deuxième matrice (36) étant superposée avec la première matrice (24) avec un décalage vertical d'une distance de décalage (P) verticale inférieure à ladite hauteur (Dh) déterminé par rapport aux premiers pixels lumineux (26) de la première matrice (24), le décalage étant défini par rapport à une position de superposition « non décalée » dans laquelle au moins un bord transversal (41) d'extrémité inférieur de la deuxième matrice (36) est verticalement superposé avec un bord (27) transversal d'extrémité inférieure de la première matrice (24),
**caractérisé en ce que** chaque pixel lumineux (26, 38) de la première matrice (24) et de la deuxième matrice (36) présentant une hauteur inférieure à 2°.

2. Dispositif d'éclairage (12) selon la revendication précédente, **caractérisé en ce que** chaque deuxième pixel lumineux (38) de la deuxième matrice (36) présente la même largeur (DI) qu'un premier pixel lumineux (26) en coïncidence de la première matrice (24).

3. Dispositif d'éclairage (12) selon l'une quelconque des revendications précédentes, **caractérisé en ce que** la deuxième matrice (36) comporte au moins autant de lignes (42) de pixels lumineux (38) que la première matrice (24).

4. Dispositif d'éclairage (12) selon la revendication précédente, **caractérisé en ce que** la deuxième matrice (36) comporte une ligne (42) de plus que la première matrice (24), les deuxièmes pixels lumineux (38) de la ligne (42) d'extrémité supérieure et de la ligne (42) d'extrémité inférieure de la deuxième matrice (36) débordant verticalement à l'extérieur de la première matrice (24).

5. Dispositif d'éclairage (12) selon l'une quelconque des revendications précédentes, **caractérisé en ce que** chaque pixel lumineux (26, 38) de la première matrice (24) et de la deuxième matrice (36) présente une largeur inférieure à 2°.

6. Dispositif d'éclairage (12) selon l'une quelconque des revendications précédentes, **caractérisé en ce que** la distance de décalage (P) vertical de la deuxième matrice (36) par rapport à la première matrice (24) est sensiblement égale à la moitié de la hauteur (Dh) déterminée.

7. Dispositif d'éclairage (12) selon l'une quelconque des revendications précédentes, **caractérisé en ce que** les matrices (24, 36) comportent plus de colonnes (28, 40) que de lignes (30, 42).

8. Dispositif d'éclairage (12) selon l'une quelconque des revendications précédentes, **caractérisé en ce que** les colonnes (40) de la deuxième matrice (36) sont agencées en coïncidence avec les colonnes (28) de la première matrice (24).

9. Dispositif d'éclairage selon l'une quelconque des revendications précédentes, **caractérisé en ce que** le faisceau lumineux à pixels lumineux (16) est émis selon un axe (A) d'émission, la première matrice (24) est centrée verticalement par rapport audit l'axe (A).

## Patentansprüche

1. Beleuchtungsvorrichtung (12) für ein Kraftfahrzeug (10), die eine bestimmte Beleuchtungsfunktion ausübt, wobei die Vorrichtung (12) enthält:
- ein erstes Beleuchtungsmodul (20), das mindestens eine erste Matrix (24) von unabhängig aktivierbaren, nebeneinander angeordneten ersten Leuchtpixeln (26) projiziert, wobei die ersten Leuchtpixel (26) in mehreren vertikalen Spalten (28) und in mindestens einer Querzeile (30) bestimmter Höhe (Dh) angeordnet sind,
- ein zweites Beleuchtungsmodul (22), das eine zweite Matrix (36) von unabhängig aktivierbaren, nebeneinander angeordneten zweiten Leuchtpixeln (38) projiziert, wobei die zweiten Leuchtpixel (38) in mindestens einer Querzeile (42) angeordnet sind,
wobei die zweite Matrix (36) sich mit der ersten Matrix (24) mit einem vertikalen Versatz eines vertikalen Versatzabstands (P) kleiner als die bestimmte Höhe (Dh) bezüglich der ersten Leuchtpixel (26) der ersten Matrix (24) überlagert, wobei der Versatz bezüglich einer "nicht versetzten" Überlagerungsposition definiert ist, in der mindestens ein unterer Endquerrand (41) der zweiten Matrix (36) vertikal mit einem unteren Endquerrand (27) der ersten Matrix (24) überlagert ist,
**dadurch gekennzeichnet, dass** jedes Leuchtpixel (26, 38) der ersten Matrix (24) und der zweiten Matrix (36) eine Höhe von weniger als 2° aufweist.

2. Beleuchtungsvorrichtung (12) nach dem vorhergehenden Anspruch, **dadurch gekennzeichnet, dass** jedes zweite Leuchtpixel (38) der zweiten Matrix (36) die gleiche Breite (DI) wie ein erstes Leuchtpixel (26) in Überdeckung der ersten Matrix (24) aufweist.

3. Beleuchtungsvorrichtung (12) nach einem der vorhergehenden Ansprüche, **dadurch gekennzeichnet, dass** die zweite Matrix (36) mindestens so viele Zeilen (42) von Leuchtpixeln (38) aufweist wie die erste Matrix (24).

4. Beleuchtungsvorrichtung (12) nach dem vorhergehenden Anspruch, **dadurch gekennzeichnet, dass** die zweite Matrix (36) eine Zeile (42) mehr aufweist als die erste Matrix (24), wobei die zweiten Leuchtpixel (38) der oberen Endzeile (42) und der unteren Endzeile (42) der zweiten Matrix (36) vertikal außerhalb der ersten Matrix (24) vorstehen.

5. Beleuchtungsvorrichtung (12) nach einem der vorhergehenden Ansprüche, **dadurch gekennzeichnet, dass** jedes Leuchtpixel (26, 38) der ersten Matrix (24) und der zweiten Matrix (36) eine Breite von weniger als 2° aufweist.

6. Beleuchtungsvorrichtung (12) nach einem der vorhergehenden Ansprüche, **dadurch gekennzeichnet, dass** der vertikale Versatzabstand (P) der zweiten Matrix (36) bezüglich der ersten Matrix (24) im Wesentlichen gleich der Hälfte der bestimmten Höhe (Dh) ist.

7. Beleuchtungsvorrichtung (12) nach einem der vorhergehenden Ansprüche, **dadurch gekennzeichnet, dass** die Matrizen (24, 36) mehr Spalten (28, 40) als Zeilen (30, 42) aufweisen.

8. Beleuchtungsvorrichtung (12) nach einem der vorhergehenden Ansprüche, **dadurch gekennzeichnet, dass** die Spalten (40) der zweiten Matrix (36) in Überdeckung mit den Spalten (28) der ersten Matrix (24) angeordnet sind.

9. Beleuchtungsvorrichtung nach einem der vorhergehenden Ansprüche, **dadurch gekennzeichnet, dass** der Lichtstrahl mit Leuchtpixeln (16) gemäß einer Emissionsachse (A) emittiert wird, die erste Matrix (24) vertikal bezüglich der Achse (A) zentriert ist.

## Claims

1. Lighting device (12) for a motor vehicle (10) producing a determined lighting function, the device (12) comprising
- a first lighting module (20) projecting at least one first matrix (24) of first independently activatable juxtaposed light pixels (26), the first light pixels (26) being arranged in several vertical columns (28) and in at least one transverse row (30) of determined height (Dh),
- a second lighting module (22) projecting a second matrix (36) of second independently activatable juxtaposed light pixels (38), the second light pixels (38) being arranged in at least one transverse row (42),
the second matrix (36) being superposed with the first matrix (24) with a vertical offset by a vertical offset distance (P) less than said determined height (Dh) relative to the first light pixels (26) of the first matrix (24), the offset being defined in relation to a "non-offset" position of superposition in which at least the bottom end transverse edge (41) of the second matrix (36) is vertically superposed with the bottom end transverse edge (27) of the first matrix (24),
**characterized in that** each light pixel (26, 38) of the first matrix (24) and of the second matrix (36) has a height less than 2°.

2. Lighting device (12) according to the preceding claim, **characterized in that** each second light pixel (38) of the second matrix (36) has the same width (DI) as a coinciding first light pixel (26) of the first matrix (24).

3. Lighting device (12) according to either one of the preceding claims, **characterized in that** the second matrix (36) comprises at least as many rows (42) of light pixels (38) as the first matrix (24).

4. Lighting device (12) according to the preceding claim, **characterized in that** the second matrix (36) comprises one row (42) more than the first matrix (24), the second light pixels (38) of the top end row (42) and of the bottom end row (42) of the second matrix (36) extending vertically outwards beyond the first matrix (24).

5. Lighting device (12) according to any one of the preceding claims, **characterized in that** each light pixel (26, 38) of the first matrix (24) and of the second matrix (36) has a width less than 2°.

6. Lighting device (12) according to any one of the preceding claims, **characterized in that** the vertical offset distance (P) of the second matrix (36) relative to the first matrix (24) is substantially equal to half the determined height (Dh).

7. Lighting device (12) according to any one of the preceding claims, **characterized in that** the matrices (24, 36) comprise more columns (28, 40) than rows (30, 42).

8. Lighting device (12) according to any one of the preceding claims, **characterized in that** the columns (40) of the second matrix (36) are arranged to coincide with the columns (28) of the first matrix (24).

9. Lighting device according to any one of the preceding claims, **characterized in that** the light beam with light pixels (16) is emitted along an axis (A) of emission, the first matrix (24) is centred vertically relative to said axis (A).
